# DEMANDE DE BREVET EUROPEEN

(11) **EP 2 436 562 A1**
(43) Date de publication de la demande: **04.04.2012**
(21) Numéro de dépôt: 11183885.0
(22) Date de dépôt: 04.10.2011
(51) Int. Cl.: B60R 5/04, B60R 7/02

(54) **Dispositif articulé de retenue d'au moins un objet dans un coffre de véhicule**

(30) Priorité: 04.10.2010 FR 1058028
(71) Demandeur: Advanced Comfort Systems France SAS - ACS France, 79302 Bressuire Cedex (FR)
(72) Inventeur: Cordillet, Mikaël, 28300 JOUY (FR); Chemineau, Nicolas, 85310 CHAILLE SOUS LES ORMEAUX (FR); Crabeil, Alexis, 79140 CERIZAY (FR)
(74) Mandataire: Bioret, Ludovic

(57) **Abrégé**

Dispositif de retenue d'au moins un objet, destiné à être monté sur un rail prévu à cet effet dans un véhicule automobile, comprenant un patin de guidage (11), apte à circuler dans ledit rail, des moyens de verrouillage (111), aptes à immobiliser ledit patin dans ledit rail, et au moins un élément de retenue (12, 13) de retenue d'objets. Le ou au moins un desdits éléments de retenue (12, 13) est mobile par rapport audit patin, selon au moins un premier axe de rotation, des moyens de blocage de cette rotation permettant de définir deux états :
- un état verrouillé, dans lequel la rotation de l'élément de retenue (12, 13) par rapport audit patin (11) est bloqué ;
- un état déverrouillé, dans lequel l'élément de retenue (12, 13) peut être déplacer en rotation par rapport audit patin (11).

## Description

Le domaine de l'invention est celui de l'automobile, et plus précisément celui du stockage et du maintien, ou retenue, d'objets transportés dans un véhicule automobile, et notamment dans son coffre (domaine connu sous le terme anglais de « cargo-management »).

Plus précisément encore, l'invention concerne le maintien efficace et sûr d'objets, par exemple contre le plancher, le fond et/ou les parois latérales du coffre, ou encore contre une paroi, ou cloison, définissant plusieurs espaces dans le coffre.

Le domaine du « cargo-management » fait, depuis plusieurs années, l'objet de nombreuses recherches et propositions, pour optimiser et organiser l'espace de stockage et/ou de rangement, et pour maintenir de façon efficace des objets dans le coffre, et éviter qu'ils se renversent, glissent et/ou soient projetés l'un contre l'autre, ou contre une paroi du coffre.

Il est ainsi connu de disposer des rails sur le plancher et/ou les parois du coffre, dans lesquels peuvent être montés et déplacés divers accessoires, ou éléments de retenue, tels que des supports de délimitation de zone dans le coffre, par exemple sous la forme d'éléments télescopiques, des anneaux permettant le passage et la solidarisation de sangles ou de tendeurs, ou encore des dispositifs enrouleurs de sangle.

Malgré la possibilité de réglage de la position, sur la profondeur du coffre, à l'aide des rails, l'utilisation de tels accessoires à sangle reste limitée à certaines applications particulières. Ainsi, certaines de ces sangles s'étendent dans un plan vertical, pour permettre de plaquer une valise, par exemple, contre le fond, ou une paroi latérale du coffre. D'autres types d'accessoires ont été proposés, comprenant des sangles s'étendant dans un plan horizontal, pour permettre un maintien efficace d'un objet qui devrait être plaqué sur le plancher du coffre.

Il est donc nécessaire de multiplier le nombre d'accessoires, pour disposer d'une réponse efficace à toutes les circonstances, d'autant plus qu'il est souvent souhaitable de disposer de deux sangles pour maintenir un objet, tel qu'une valise ou un colis.

Il existe donc un besoin d'améliorer les possibilités de retenue d'un ou plusieurs objets dans un coffre, de façon simple et ergonomique.

L'invention a notamment pour objectif d'apporter une solution à ce besoin.

Plus précisément, un objectif de l'invention est de fournir une technique permettant d'assurer, de façon simple et efficace, le maintien d'objets de forme et de taille diverses (par exemple un pack de bouteilles d'eau, un bidon d'huile, une valise,...), dans le coffre d'un véhicule automobile, à un emplacement choisi par l'utilisateur.

Un autre objectif de l'invention est, selon au moins un mode de réalisation, d'apporter de nouvelles fonctionnalités dans les systèmes de sanglage.

Ces objectifs, ainsi que d'autres qui apparaîtront par la suite sont atteints à l'aide d'un dispositif de retenue d'au moins un objet, destiné à être monté sur un rail prévu à cet effet dans un véhicule automobile, comprenant un patin de guidage, apte à circuler dans ledit rail, des moyens de verrouillage, aptes à immobiliser ledit patin dans ledit rail, et au moins un élément de retenue d'objets. Selon l'invention, ce ou au moins un de ces éléments est mobile par rapport audit patin, selon au moins un premier axe de rotation, des moyens de blocage de cette rotation permettant de définir deux états :
- un état verrouillé, dans lequel la rotation de l'élément de retenue par rapport audit patin est bloqué ;
- un état déverrouillé, dans lequel l'élément de retenue peut être déplacer en rotation par rapport audit patin.

Ainsi, il est possible, avec un même accessoire, d'offrir plusieurs variantes d'utilisation, en faisant varier son inclinaison. Les moyens de blocage permettent d'immobiliser l'élément de retenue dans une position choisie par l'utilisateur (le dispositif offrant au moins deux positions d'inclinaison prédéfinies, ou permettant un réglage en toute position d'inclinaison). Ceci permet de garantir que, une fois bloquée, l'élément de blocage conserve sa position, et ne se déplace pas, ce qui pourrait induire un déplacement ou une modification de la tension d'un élément de retenue. Cette approche s'oppose à celle des dispositifs montés sur rotule, qui sont en conséquence mobile en permanence.

Le premier axe s'étend donc préférentiellement parallèlement au plancher du coffre, et par exemple, mais non obligatoirement, perpendiculairement à l'axe du rail qui porte l'accessoire.

Ledit au moins un élément de retenue peut notamment comprendre au moins une sangle montée sur des moyens d'enroulement. L'élément de retenue peut alors se présenter sous la forme d'un boîtier, ou logement, contenant ladite sangle (ou le cas échéant un autre moyen de retenue), ainsi que les moyens permettant de contrôler son enroulement et son déroulement.

Ainsi, dans ce cas, le plan défini par la sangle, lorsqu'elle est déployée, peut prendre une position adaptée aux besoins, et s'étendre par exemple horizontalement (parallèlement au plancher) ou verticalement (parallèlement à une cloison du coffre).

D'autres éléments de retenue peuvent comprendre des crochets, permettant notamment la liaison avec l'extrémité libre d'une sangle. Le boîtier contenant la sangle peut également porter un (ou plusieurs) crochet de ce type.

Un tel élément de retenue à sangle peut porter une bague mobile en rotation entre une position de blocage et une position de déblocage du déroulement et/ou de l'enroulement de ladite sangle.

D'autres moyens de contrôle du blocage sont bien sûr envisageables.

Selon une mise en oeuvre particulière, le dispositif de l'invention comprend au moins deux enrouleurs de sangle superposés.

Ainsi, s'il s'agit d'éléments à sangle, il est possible de disposer de deux sangles parallèles sur un même accessoire (ou, selon une formulation différente, de deux accessoires sur le même support), ce qui permet un maintien beaucoup plus efficace des objets.

Selon un mode de réalisation particulier, ledit patin et un élément de retenue sont solidarisés par un axe de liaison, formant également au moins une partie desdits moyens de blocage, en pouvant prendre deux positions, par translation, correspondant auxdits deux états.

Comme déjà mentionné, ledit au moins un élément de retenue peut avantageusement prendre au moins deux positions, une position verticale et une position horizontale. Dans certains modes de réalisation, ledit au moins un élément de retenue peut prendre en outre au moins une position d'inclinaison intermédiaire, entre la position verticale et la position horizontale.

Ledit axe de liaison peut comprendre des premiers moyens d'engrenage, venant en prise dans chacune des positions possibles avec des moyens d'engrenage complémentaires formés sur ledit élément de retenue, dans ladite position verrouillée.

D'autres moyens de blocage de la rotation (vis de blocage, clé quart de tour, bouton de blocage,...) indépendants de l'axe de liaison sont envisageables en variante, mais introduisent des pièces supplémentaires.

Selon un mode de réalisation particulier, ledit patin est équipé de rouleaux de blocage, pouvant prendre une position de blocage et une position de déblocage, permettant le déplacement du dispositif dans le rail, et en ce que ledit dispositif porte une rampe permettant le passage de ladite position de blocage à ladite position de déblocage, lorsque ledit dispositif est déplacé en rotation selon un axe perpendiculaire au plancher dudit coffre.

Le ou lesdits éléments de retenue peuvent par ailleurs être articulés par rapport audit patin, selon un second axe de rotation, perpendiculaire audit premier axe de rotation.

On augmente ainsi encore les possibles positions pour le ou les accessoires.

D'autres caractéristiques et avantages de l'invention apparaîtront à la lecture de la description suivante d'un mode de réalisation de l'invention, donné à titre de simple exemple illustratif et non-limitatif et des dessins annexés, parmi lesquels :
- la figure 1 illustre un exemple d'éléments de retenue, ou accessoires, selon l'invention, formés de deux éléments enrouleur de sangle superposés ;
- les figure 2A et 2B illustrent deux positions particulières pour des éléments de retenue de la revendication 1, dans des positions d'inclinaison différentes par rapport aux rails ;
- la figure 3 présente la bague bloqueur de l'enrouleur de l'élément de retenue de la figure 1 ;
- la figure 4 est une vue en coupe des éléments de retenue de la figure 1 ;
- la figure 5 est une vue en éclaté des moyens permettant de contrôler l'inclinaison des éléments de retenue de la figure 1 ;
- la figure 6A présente un exemple de rail adapté pour recevoir l'élément de retenue de la figure 1 et la figure 6B est une vue en coupe des moyens de verrouillage en coulissement dans le rail ;
- la figure 7 illustre un exemple de moyens de verrouillage du coulissement d'un accessoire, à l'aide d'un système à gâchette ;
- les figures 8A à 8E illustrent cinq exemples de positions possibles dans un coffre, pour l'élément de retenue de la figure 1 ;
- les figures 9A et 9B présentent une variante d'utilisation d'un élément de retenue, permettant de retenir un hayon, dans le cas de transport d'élément de grande longueur ;
- les figures 10A et 10B illustrent des variantes des moyens des figures 9A et 9B.

L'invention propose donc une nouvelle approche des accessoires de « cargo-management », permettant d'améliorer le maintien, ou la retenue, d'objets dans un coffre de véhicule automobile, quelles que soient leurs formes et leur position dans le coffre, et/ou d'optimiser l'organisation du coffre, par exemple à l'aide d'éléments formant cloison.

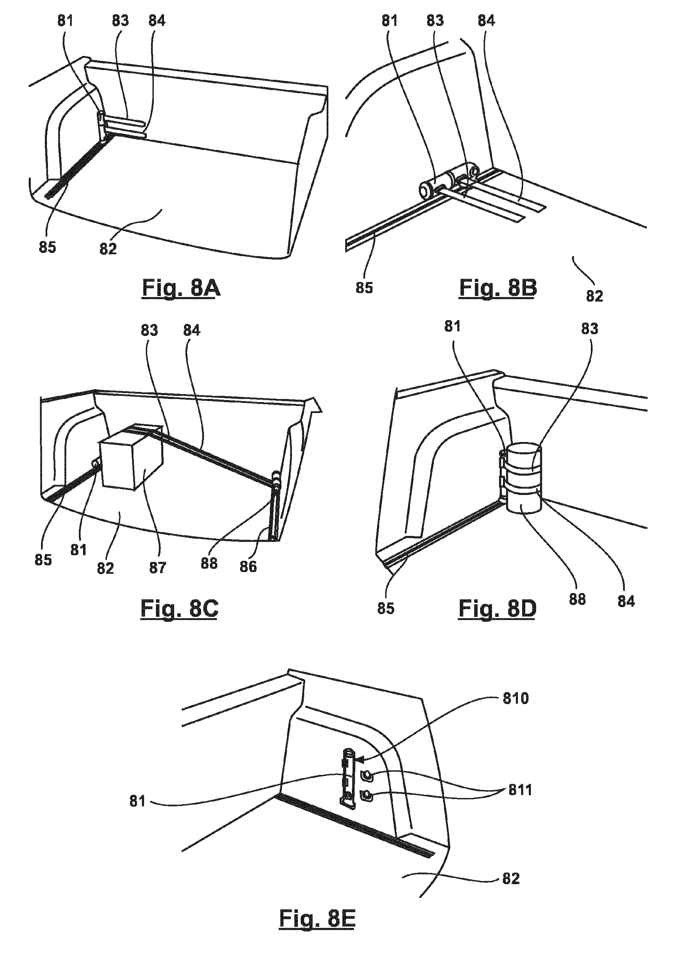

Selon l'invention, les accessoires, ou éléments de retenue, sont adaptés pour être montés dans des rails de coffre, de façon à ce qu'ils puissent être déplacés en coulissement. Généralement, de tels rails de coffre s'étendent sur le plancher du coffre, le long des parois latérales de ce coffre (voir par exemple les figures 8A à 8E). Il est cependant possible de disposer des rails en d'autres positions (perpendiculairement à l'axe du véhicule, en position centrale, sur les parois latérale ou le fond du coffre...). On peut également prévoir des éléments ponctuels de fixation, en des emplacements adaptés.

Selon l'invention, l'accessoire est mobile en rotation, selon un axe de rotation parallèle au plan du plancher du coffre, et de préférence perpendiculaire à l'axe du rail qu'il porte. Plus précisément, on prévoit un porte-accessoire, mobile dans le rail, et portant de façon articulée un ou plusieurs éléments de retenue (qui peuvent être superposés).

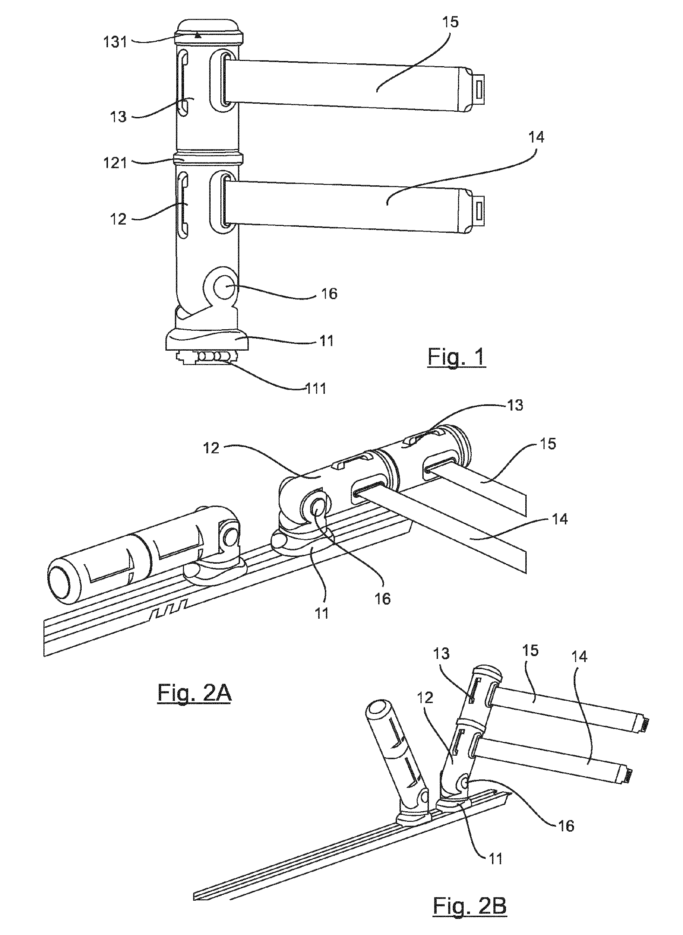

Un exemple particulier d'un tel accessoire est illustré en figure 1, sous la forme de deux éléments enrouleurs de sangle superposés. Cet accessoire est donc équipé d'un patin 11, assurant la fonction de porte-accessoire, et permettant le déplacement en coulissement de l'accessoire dans un rail, et son immobilisation en toute position dans ce rail.

Dans le mode de réalisation illustré ce patin 11 est muni de rouleaux mobiles 111, selon la technique illustrée dans le document de brevet EP-1097846. D'autres moyens de guidage et d'immobilisation dans un rail peuvent bien sûr être mis en oeuvre, par exemple à l'aide d'un mécanisme à base de crémaillère, tel qu'illustré notamment dans le document de brevet EP-1852303.

L'accessoire comprend par ailleurs, deux éléments 12 et 13 enrouleurs de sangle 14 et 15. La présence de ces deux sangles 14 et 15 permet un maintien plus efficace des objets, et la prise en compte, le cas échéant, de la forme complexe d'un tel objet.

Bien sûr, l'accessoire peut également porter un unique enrouleur de sangle, par exemple du type décrit dans le document de brevet FR-10 56358 (non publié), incorporé ici par référence. Il peut également s'agir d'un accessoire portant un élément d'accrochage, pour coopérer avec le crochet d'une sangle, ou encore un élément de solidarisation à une portion de cloison mobile, ...

L'élément 12 est monté articulé par rapport au patin 11, par l'intermédiaire d'un axe 16, permettant de contrôler l'inclinaison de l'accessoire. Ainsi, l'accessoire peut s'étendre verticalement, comme illustré par la figure 1, ou encore horizontalement comme cela apparaît sur la figure 2A. Dans le cas de la figure 1, les sangles 14 et 15 s'étendent dans un plan vertical, et permettent par exemple de plaquer une valise contre le fond du coffre. Selon l'approche de la figure 2A, il est possible de plaquer une telle valise sur le fond du coffre, les sangles 14 et 15 s'étendant horizontalement.

Des positions d'inclinaison intermédiaires, comme illustrées par la figure 2B, peuvent également être prévues, pour s'adapter à des formes complexes d'un objet, ou à des exigences particulières de l'organisation du coffre.

Ainsi, avec un unique accessoire, il est possible de répondre à la plupart des situations.

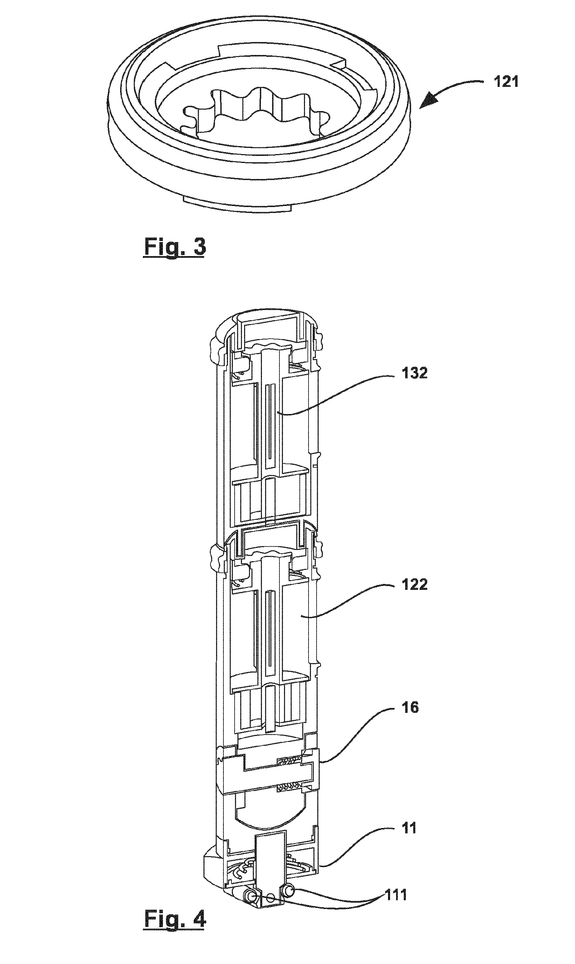

Les sangles 14 et 15 peuvent être montées dans les éléments 12 et 13 à l'aide d'un mécanisme tel que celui décrit dans le document FR-10 56358 susmentionné. Dans le mode de réalisation décrit dans ce document, le contrôle de la sangle se fait par un bouton central placé en partie supérieure de l'accessoire. Dans le cas d'éléments superposés selon la figure 1, on remplace ce bouton central par une bague 121, 131, placée le long de l'accessoire. Une telle bague, illustrée en figure 3, est conçue pour assurer les mêmes fonctions de verrouillage/déverrouillage que le bouton central, par un décalage de la portion dentée, qui vient en prise (position verrouillée) ou non (position déverrouillée) avec l'axe portant la sangle.

La figure 4 est une vue en coupe de l'accessoire de la figure 1. On distingue notamment les deux axes d'un roulement 132, 122, l'axe de rotation 16 et le patin 11.

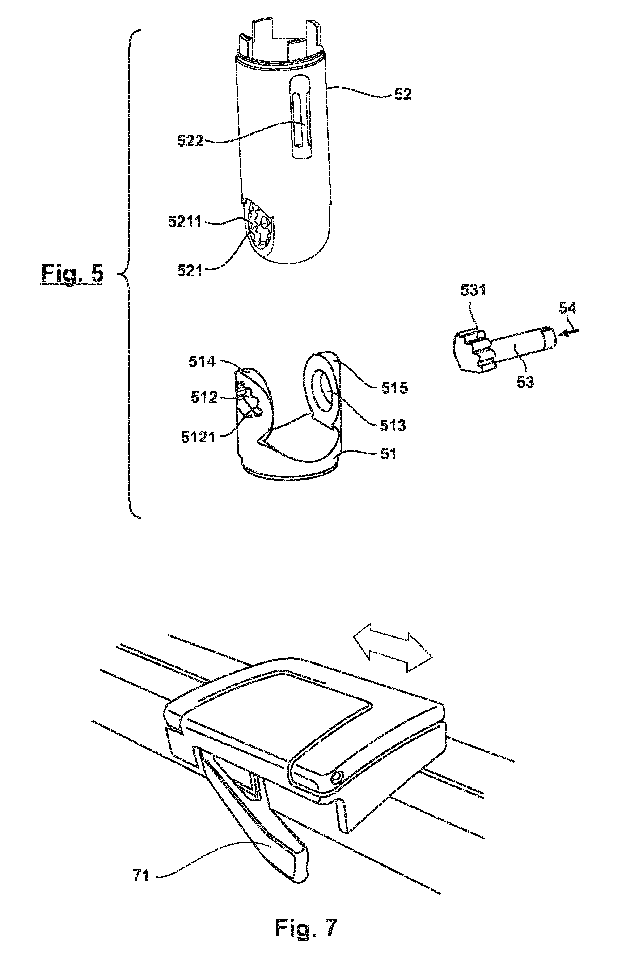

La figure 5 présente, de façon plus précise, en éclaté, les trois éléments permettant cette rotation. Un support 51 d'accessoire est solidaire du patin 11.

Selon une variante, on notera que ce support 51 peut également être mobile en rotation, par rapport au patin 11, selon un axe perpendiculaire au plancher du coffre, de façon à augmenter encore les possibilités de modifications de l'orientation des accessoires. Dans ce cas, on peut prévoir des moyens de crantage entre les pièces 11 et 51, qui viennent s'engrener dans une position verrouillée, et que l'on peut écarter l'une de l'autre dans une position déverrouillée.

Le corps inférieur 52 de l'accessoire présente, en sa partie inférieure, une lumière 521, adaptée pour coïncider avec les deux lumières 512 et 513 formées dans les « oreilles » 514 et 515 du support 51. Les formes respectives du support 51 et du corps inférieur 52 de l'accessoire sont adaptées pour que ce dernier puisse être assemblées, en permettant le pivotement de l'accessoire par rapport à son support.

Un axe 53 est prévu pour assurer la solidarisation entre ces deux pièces. Il traverse donc les deux lumières 512 et 513 et la lumière 521. Cet axe 53 porte, à l'une de ses extrémités, un crantage 531, définissant ici une roue dentée. La lumière 512 porte un crantage complémentaire 5121, de même qu'une portion 5211 de la lumière 521. Cet axe 53 assure donc d'une part une fonction de solidarisation, et d'autre part une fonction de débrayage, ou de contrôle du verrouillage ou du déverrouillage, du réglage en inclinaison. Pour ceci, il peut prendre deux positions, en étant déplacé selon axe, correspondant à :
- un état verrouillé (bloqué en inclinaison), dans laquelle le crantage 531 est engrené avec les crantages complémentaires 5121 et 5211 ;
- un état déverrouillé (permettant une modification manuelle de l'inclinaison), dans laquelle le crantage 531 n'est plus engrené avec le crantage 5211, l'élément 52 pouvant alors être pivoté.

L'état verrouillé est de préférence l'état par défaut, et des moyens de rappel peuvent être prévus pour tendre à ramener l'axe 53 dans cet état, en l'absence de sollicitation. Pour passer dans l'état déverrouillé, l'utilisateur appuie alors sur l'axe 53 (flèche 54), pour dégager temporairement le crantage 531 du crantage 5211.

On note ici, sur le corps inférieur 52, la présence d'un crochet 522, qui peut coopérer notamment avec un élément complémentaire d'accrochage, monté à l'extrémité d'une sangle.

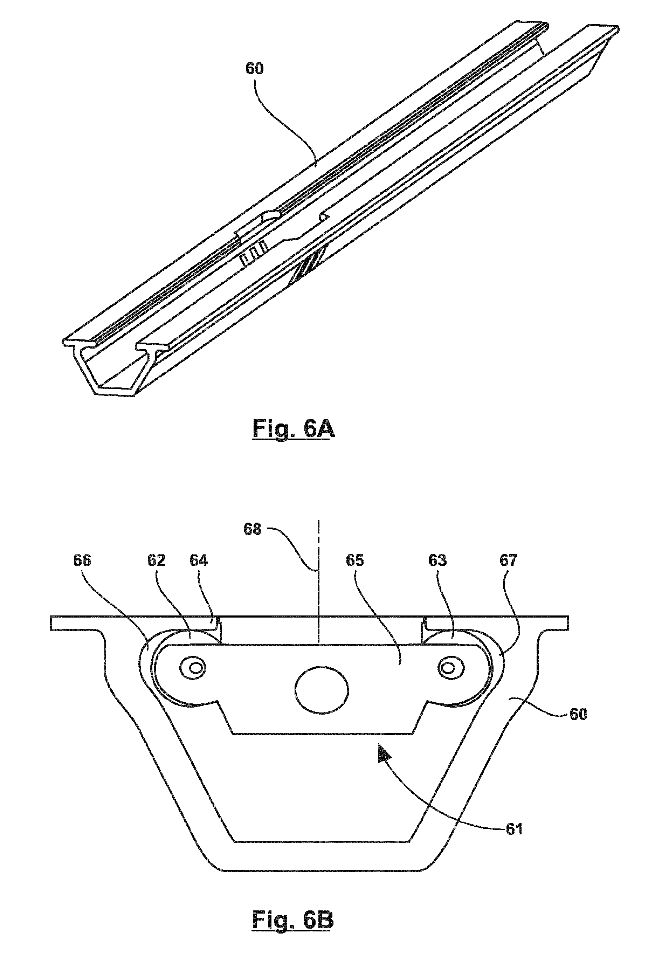

La figure 6A illustre, à titre d'exemple, un rail 60 pouvant être utilisé pour le guidage des accessoires selon l'invention. Ce rail présente par exemple une largeur maximale de l'ordre de 4 à 5 cm, et une hauteur de l'ordre de 2 à 3 cm. Il peut notamment être réalisé en aluminium.

Le guidage en coulissement et le blocage, ou verrouillage, de l'accessoire par rapport à ces rails peut notamment être assuré à l'aide d'un mécanisme à rouleaux, tel que décrit notamment dans le document de brevet EP-1097846.

Ainsi, comme illustré schématiquement par la figure 6B, qui présente le rail de la figure 6A, en coupe, et un chariot, ou patin, 61 de blocage à rouleaux, ce dernier porte deux rouleaux 62, 63, qui sont immobilisés par frottement contre la partie supérieure 64 du rail, par l'intermédiaire de la pièce 65, en l'absence de sollicitation.

Le déverrouillage peut être obtenu en tirant (vers le haut) sur la pièce 65, par exemple par l'intermédiaire d'un câble 68, ce qui déplace les rouleaux 62 et 63 dans les gorges correspondantes 66 et 67 du rail. Dans cette position, le chariot 61 peut être déplacé en coulissement le long du rail. En l'absence de sollicitation, et sous l'effet de moyens de rappel (non représentés), les rouleaux 62, 63 reprennent la position illustrée sur la figure 6B, et le chariot est verrouillé, c'est-à-dire immobilisé en coulissement.

Afin de faciliter la manoeuvre de verrouillage / déverrouillage, on peut également prévoir une action de type quart de tour sur la base de l'accessoire. Dans ce cas, une rotation de l'embase entraîne le déverrouillage de l'accessoire via un guide de débrayage muni d'une pente adaptée. Ceci permet de déverrouiller l'accessoire afin de pouvoir la manoeuvrer librement le long du rail. Un verrouillage est possible après une nouvelle rotation de l'embase de l'accessoire.

Un système d'appui sur l'ensemble de l'accessoire (« push ») peut aussi être prévu. Dans ce cas, un coulissement dans le rail est possible uniquement sous le maintien de l'action « push ».

Une autre approche peut être un système à gâchette 71 pour déverrouiller l'ensemble, comme illustré en figure 7 (qui présente uniquement l'embase de l'accessoire).

Comme déjà mentionné, un accessoire tel que décrit ci-dessus permet de nombreuses mises en oeuvre, pour s'adapter à diverses situations, dont certaines sont illustrées, à titre d'exemples, par les figures 8A à 8E :
- figure 8A : l'accessoire 81 s'étend verticalement, à proximité de la paroi de fond 82 du coffre. Dans cette approche, les deux sangles 83, 84 permettent de maintenir efficacement une valise (par exemple) plaquée contre la paroi de fond ;
- figures 8B et 8C : l'accessoire 81 s'étend horizontalement, parallèlement au rail 85, ce qui permet le maintien des valises 87 par rapport au plancher 82 du coffre. Dans le cas de la figure 8C, les sangles 83, 84 sont déployées depuis l'accessoire 81 pour être accrochées à un deuxième accessoire similaire 88, monté symétriquement sur le second rail 86 ;
- figure 8D : l'accessoire 81 s'étend verticalement, et les sangles 83, 84 font le tour de l'objet 89 (ici une bouteille de gaz) pour être solidarisées au corps de l'accessoire (voir le crochet 522, figure 5) ;
- figure 8E : il peut être prévu, dans le coffre, un rangement 810 pour loger l'accessoire 81, lorsqu'il n'est pas utilisé. On notera également, sur cette figure 8E, la présence optionnelle de crochets 811, solidaires de la structure du véhicule et pouvant coopérer avec les sangles 83, 84.

Un accessoire selon l'invention peut également être prévu pour coopérer avec un élément complémentaire prévu à cet effet sur la face intérieure du hayon du véhicule, pour maintenir ce hayon, lorsque celui-ci doit rester partiellement ouvert pour permettre le transport d'objets de grande longueur.

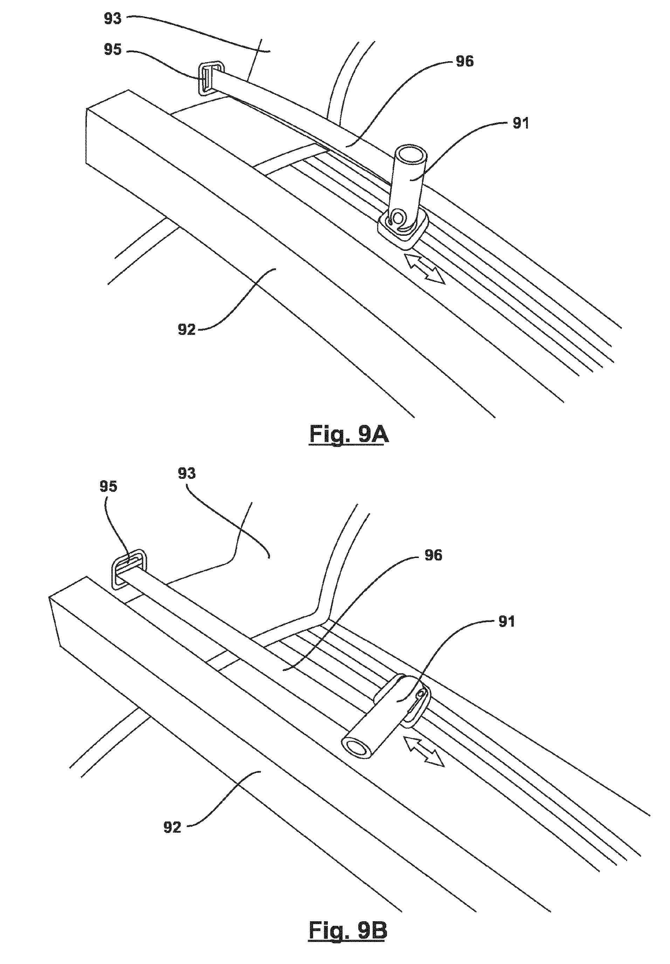

Les figures 9A et 9B illustrent ce type d'utilisation d'un accessoire 91 selon l'invention (avec dans cet exemple un seul enrouleur). Un objet de grande longueur 92 empêche la fermeture du hayon 93, qui vient buter contre l'extrémité de cet objet 92. Le hayon est équipé d'au moins un crochet 95, apte à coopérer avec l'élément d'accrochage de la sangle 96 de l'accessoire 91.

Ainsi, le hayon 93 est maintenu efficacement, et ne risque pas de s'ouvrir ni de venir battre contre l'extrémité de l'objet 92.

Selon la position du crochet 95 sur le hayon, verticale (figure 9A) ou horizontale (figure 9B), l'accessoire 91 est placé de façon à s'étendre verticalement ou horizontalement.

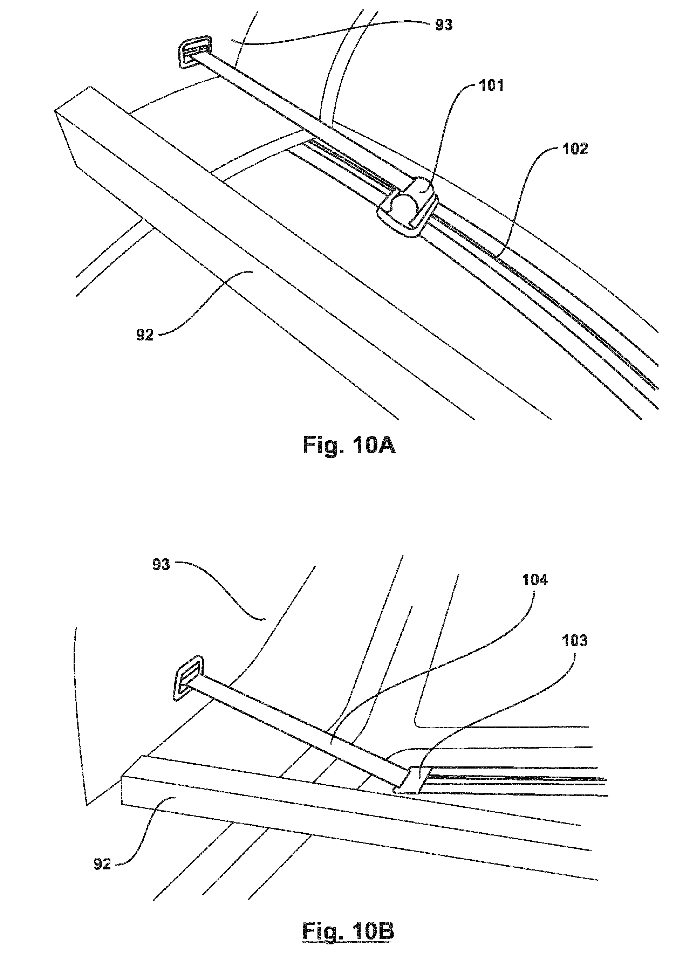

Il est à noter que, dans d'autres modes de réalisation, cette solution de retenue du hayon peut être mise en oeuvre indépendamment de l'utilisation d'un accessoire mobile en rotation tel que décrit précédemment. Ainsi, il peut être prévu un accessoire enrouleur de sangle 101 monté dans le rail 102, comme illustré sur la figure 10A.

On peut également prévoir qu'un tel enrouleur soit monté de façon fixe dans le coffre, et par exemple de façon affleurant. Il est également possible de loger les moyens d'enroulement dans le hayon, les moyens d'accrochage de la sangle étant alors prévus dans le coffre.

L'accessoire n'est pas obligatoirement verrouillable en toute position dans le rail, comme dans le cas de la figure 10A. L'accessoire 103 peut en effet être adapté pour venir en butée à l'extrémité du rail 103, comme illustré par la figure 10B.

Par ailleurs, la sangle montée sur enrouleur peut être remplacée par une sangle 104 élastique.

## Revendications

1. Dispositif de retenue d'au moins un objet, destiné à être monté sur un rail prévu à cet effet dans un véhicule automobile, comprenant un patin de guidage (11), apte à circuler dans ledit rail, des moyens de verrouillage (111), aptes à immobiliser ledit patin dans ledit rail, et au moins un élément de retenue (12, 13) de retenue d'objets,
**caractérisé en ce que** le ou au moins un desdits éléments de retenue (12, 13) est mobile par rapport audit patin, selon au moins un premier axe de rotation, des moyens de blocage (531, 5211) de cette rotation permettant de définir deux états :
- un état verrouillé, dans lequel la rotation de l'élément de retenue (12, 13) par rapport audit patin (11) est bloqué ;
- un état déverrouillé, dans lequel l'élément de retenue (12, 13) peut être déplacer en rotation par rapport audit patin (11).

2. Dispositif de retenue selon la revendication 1, **caractérisé en ce que** ledit au moins un élément de retenue (12, 13) comprend au moins une sangle (14, 15) montée sur des moyens d'enroulement.

3. Dispositif de retenue selon la revendication 2, **caractérisé en ce que** ledit élément de retenue (13) porte une bague (131) mobile en rotation entre une position de blocage et une position de déblocage du déroulement et/ou de l'enroulement de ladite sangle (15).

4. Dispositif de retenue selon l'une quelconque des revendications 2 et 3, **caractérisé en ce qu'**il comprend au moins deux enrouleurs de sangle (14, 15) superposés.

5. Dispositif de retenue selon l'une quelconque des revendications 1 à 4, **caractérisé en ce que** ledit patin (11) et un élément de retenue (12, 13) sont solidarisés par un axe de liaison (53), formant également au moins une partie (531) desdits moyens de blocage, en pouvant prendre deux positions, par translation, correspondant auxdits deux états.

6. Dispositif de retenue selon l'une quelconque des revendications 1 à 5, **caractérisé en ce que** ledit au moins un élément de retenue (12, 13) peut prendre au moins deux positions, une position verticale et une position horizontale.

7. Dispositif de retenue selon la revendication 6, **caractérisé en ce que** ledit au moins un élément de retenue (12, 13) peut prendre en outre au moins une position d'inclinaison intermédiaire, entre la position verticale et la position horizontale.

8. Dispositif de retenue selon l'une quelconque des revendications 5 à 7, **caractérisé en ce que** ledit axe de liaison (53) comprend des premiers moyens d'engrenage (531), venant en prise avec des moyens d'engrenage complémentaires (5211) formés sur ledit élément de retenue, dans ladite position verrouillée.

9. Dispositif de retenue selon l'une quelconque des revendications 1 à 8, **caractérisé en ce que** ledit patin (11) est équipé de rouleaux de blocage (62, 63), pouvant prendre une position de blocage et une position de déblocage, permettant le déplacement du dispositif dans le rail, et **en ce que** ledit dispositif porte une rampe permettant le passage de ladite position de blocage à ladite position de déblocage, lorsque ledit dispositif est déplacé en rotation selon un axe perpendiculaire au plancher dudit coffre.

10. Dispositif de retenue selon l'une quelconque des revendications 1 à 9, **caractérisé en ce que** le ou lesdits éléments de retenue (12, 13) sont articulés par rapport audit patin (11), selon un second axe de rotation, perpendiculaire audit premier axe de rotation.

## Revendications modifiées

### Revendications modifiées conformément à la règle 137(2) CBE.

**1.** Dispositif de retenue d'au moins un objet, destiné à être monté sur un rail prévu à cet effet dans un véhicule automobile, comprenant un patin de guidage (11), apte à circuler dans ledit rail, des moyens de verrouillage (111), aptes à immobiliser ledit patin dans ledit rail, et au moins un élément de retenue (12, 13) de retenue d'objets,
le ou au moins un desdits éléments de retenue (12, 13) étant mobile par rapport audit patin, selon au moins un premier axe de rotation,
**caractérisé en ce que** le ou au moins un desdits éléments de retenue (12, 13) comprend des moyens de blocage (531, 5211) de cette rotation permettant de définir deux états :
- un état verrouillé, dans lequel la rotation de l'élément de retenue (12, 13) par rapport audit patin (11) est bloqué ;
- un état déverrouillé, dans lequel l'élément de retenue (12, 13) peut être déplacer en rotation par rapport audit patin (1),
et **en ce que** ledit au moins un élément de retenue (12, 13) comprend au moins une sangle (14, 15) montée sur des moyens d'enroulement.

**2.** Dispositif de retenue selon la revendication 1, **caractérisé en ce que** ledit , élément de retenue (13) porte une bague (131) mobile en rotation entre une position de blocage et une position de déblocage du déroulement et/ou de l'enroulement de ladite sangle (15).

**3.** Dispositif de retenue selon l'une quelconque des revendications 1 et 2, **caractérisé en ce qu'**il comprend au moins deux enrouleurs de sangle (14, 15) superposés.

**4.** Dispositif de retenue selon l'une quelconque des revendications 1 à 3, **caractérisé en ce que** ledit patin (11) et un élément de retenue (12, 13) sont
solidarisés par un axe de liaison (53), formant également au moins une partie (531) desdits moyens de blocage, en pouvant prendre deux positions, par translation, correspondant auxdits deux états.

**5.** Dispositif de retenue selon l'une quelconque des revendications 1 à 4, **caractérisé en ce que** ledit au moins un élément de retenue (12, 13) peut prendre au moins deux positions, une position verticale et une position horizontale.

**6.** Dispositif de retenue selon la revendication **caractérisé en ce que** ledit au moins un élément de retenue (12, 13) peut prendre en outre au moins une position d'inclinaison intermédiaire, entre la position verticale et la position horizontale.

**7.** Dispositif de retenue selon l'une quelconque des revendications 4 à 6, **caractérisé en ce que** ledit axe de liaison (53) comprend des premiers moyens d'engrenage (531), venant en prise avec des moyens d'engrenage complémentaires (5211) formés sur ledit élément de retenue, dans ladite position verrouillée.

**8.** Dispositif de retenue selon l'une quelconque des revendications 1 à 7, **caractérisé en ce que** ledit patin (11) est équipé de rouleaux de blocage (62, 63), pouvant prendre une position de blocage et une position de déblocage, permettant le déplacement du dispositif dans le rail, et **en ce que** ledit dispositif porte une rampe permettant le passage de ladite position de blocage à ladite position de déblocage, lorsque ledit dispositif est déplacé en rotation selon un axe perpendiculaire au plancher dudit coffre.

**9.** Dispositif de retenue selon l'une quelconque des revendications 1 à 8, **caractérisé en ce que** le ou lesdits éléments de retenue (12, 13) sont articulés par rapport audit patin (11), selon un second axe de rotation, perpendiculaire audit premier axe de rotation.
